# EUROPÄISCHE PATENTSCHRIFT

(11) **EP 0 385 063 B1**
(45) Veröffentlichungstag und Bekanntmachung des Hinweises auf die Patenterteilung: **18.05.1994**
(21) Anmeldenummer: 90100327.7
(22) Anmeldetag: 09.01.1990
(51) Int. Cl.: G11B 23/023

(54) **Behälter zur Aufnahme einer Kassette mit einem bandförmigen Aufzeichnungsträger**
Container for a cassette with a tape-like record carrier
Boîtier pour emmagasiner une cassette avec un support d'enregistrement en forme de bande

(30) Priorität: 02.03.1989 DE 3906605
(43) Veröffentlichungstag der Anmeldung: 05.09.1990
(73) Patentinhaber: fischerwerke Artur Fischer GmbH & Co. KG, D-72178 Waldachtal (DE)
(72) Erfinder: Nehl, Wolfgang, D-7244 Waldachtal 3/Tumlingen (DE)

(56) Entgegenhaltungen:
- EP-A- 0 139 164
- EP-A- 0 163 221
- DE-B- 2 248 408
- FR-A- 2 503 914
- FR-A- 2 627 889

## Beschreibung

Die Erfindung betrifft einen Behälter zur Aufnahme einer Kassette mit einem bandförmigen Aufzeichnungsträger gemäß der Gattung des Hauptanspruches.

Es sind Behälter zur Aufnahme von Magnetbandkassetten bekannt, die aus einem kastenförmigen Gehäuse bestehen, in das mittels eines oder mehreren Schiebern Magnetbandkassetten verbracht und zur Aufbewahrung gelagert werden können. Zur Freilegung der Kassetten wird der im Gehäuse befindliche Schieber durch eine Feder aus dem Gehäuse herausgeführt und gibt damit die diesem aufliegende Kassette zur Entnahme frei.

Aus der DE-PS 2 248 408 ist ein Behälter zur Aufnahme einer Kassette mit einem bandförmigen Aufzeichnungsträger bekannt, bei dem der im Gehäuse befindliche Schieber durch Fingerdruck auf einen an der Stirnwand des Schiebers befindlichen Druckknopf durch die Federkraft aus dem Gehäuse verbracht wird. Bei Fingerdruck auf den Druckknopf soll dabei ein an einem elastischen Steg befindlicher Zahn aus einer am Gehäuseboden vorgesehenen Ausnehmung, in der der Zahn verrastet war, ausrasten und so den Schieber in die Entnahmeposition verbringen. Der elastische Steg mit dem daran befindlichen Zahn ist an der Unterseite des Schiebers ausgebildet und mit dem Druckknopf verbunden. Bei längerer Druckknopfbelastung stellt sich jedoch der Nachteil ein, daß der am elastischen Steg befindliche Zahn wieder in die am Gehäuseboden befindliche Ausnehmung einrastet und damit ein Verbringen des Transportschiebers in die Entnahmeposition verhindert. Zur Entnahme der Kassette ist daher oftmals ein mehrmaliges Betätigen des Druckknopfes erforderlich, wodurch eine leichte und unkomplizierte Handhabung des Kassettenaufnahmebehälters erschwert wird.

Der Erfindung liegt die Aufgabe zugrunde, einen Behälter zur Aufnahme einer Kassette mit einem bandförmigen Aufzeichnungsträger zu schaffen, bei dem die Entnahme der Kassette durch eine einfache Handhabung erreicht wird, indem eine sichere Entriegelung des Transportschiebers gewährleistet ist.

Die Lösung dieser Aufgabe wird bei einem Behälter der eingangs genannten Gattung durch die im kennzeichnenden Teil des Hauptanspruchs angegebenen Merkmale erhalten.

Durch die Anordnung eines Schnapphakens an der der Innenwand eines Gehäuses zugelegenen Seite des Druckknopfes und eines an der Innenwand des Gehäuses befindlichen Gegenhalters wird bei Betätigung des Druckknopfes die Entriegelung des Schiebers dadurch erreicht, daß der Schnapphaken über den Gegenhalter schnappt und dadurch den Druckknopf in einer entriegelten Position hält und gleichzeitig verhindert, daß der an der Blattfeder des Schiebers befindliche Zahn wieder in die Ausnehmung des Behältergehäuses zurückrastet. Beim Einschieben des Transportschiebers wird der Schnapphaken aufgrund der an ihm und dem Gegenhalter ausgebildeten Schrägflächen ausgelenkt und schnappt dadurch beim Einrasten des an der Blattfeder befindlichen Zahnes in die Ausnehmung des Behältergehäuses unter den Gegenhalter.

Der im unteren Bereich des Schnapphakens ausgebildete Zapfen ist dabei vorzugsweise so ausgeformt, daß er in seinem hinteren, dem Gehäuse zuweisenden Bereich eine Schrägfläche aufweist. Diese Schrägfläche erleichtert zusammen mit der an der Unterseite der den Gegenhalter bildenden Schiene ausgebildeten Schrägfläche bei der Rückführung des Transportschiebers in das Gehäuse das Einrasten des Schnapphakens unter den Gegenhalter.

Um das Wirkungsprinzip der so gewährleisteten Ver- und Entrastung zu realisieren, kann der Schnapphaken federelastisch an der Seite des Druckknopfes angeordnet sein, während der Gegenhalter fest am Gehäuse angebracht ist.

In einer weiteren Ausführungsform kann jedoch auch der Schnapphaken feststehend an der Seite des Druckknopfes angeordnet sein und der Gegenhalter an einem elastischen Abschnitt der Seitenwand des Gehäuses befindlich sein wobei die Elastizität des betreffenden Abschnittes dadurch ermöglicht wird, daß die Seitenwand des Gehäuses in dessen Bereich mit dem Boden des Gehäuses nicht fest verbunden ist.

In einer weiteren Ausführungsform kann das beschriebene Wirkungsprinzip dadurch erreicht werden, daß der Schnapphaken fest an der Seite des Druckknopfes angeordnet ist und der Gegenhalter an einer elastischen Zunge angesetzt ist, die dadurch entsteht, daß dieser Bereich der Seitenwand des Gehäuses durch zwei Einschnitte vom übrigen Bereich des Gehäuses getrennt wird.

Die Erfindung wird nachfolgend anhand der Zeichnungen näher erläutert.

Es zeigen:
- Figur 1: einen erfindungsgemäßen Behälter mit herausgenommenem Transportschieber räumlich dargestellt,
- Figur 2: den Druckknopf mit daran befindlichem Schnapphaken,
- Figur 3: drei Ansichten des Bereiches des erfindungsgemäßen Behälters in dem sich ein elastischer Schnapphaken und ein feststehender Gegenhalter befinden,
- Figur 4: zwei Ansichten des erfindungsgemäßen Behälters im Bereich eines festangebrachten Schnapphakens und eines elastischen Gegenhalters,
- Figur 5: einen erfindungsgemäßen Behälter im Bereich eines festangebrachten Schnapphakens und eines an einer Zunge des Gehäuses befindlichen Gegenhalters.

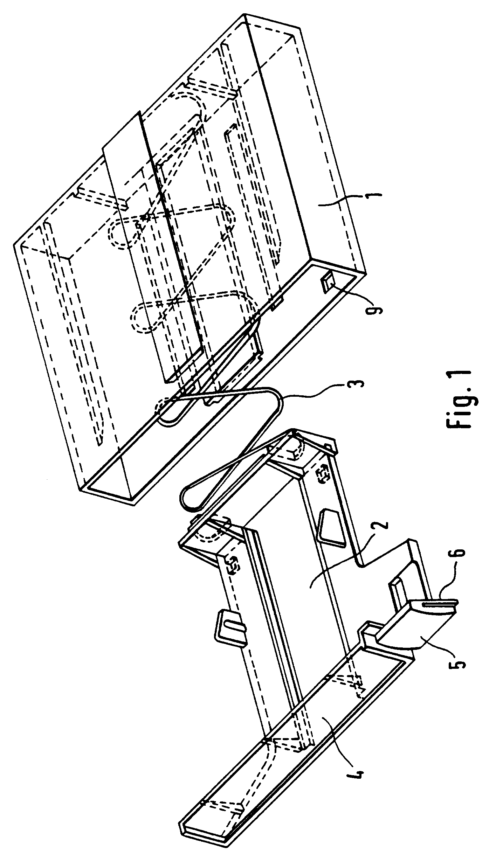

In Figur 1 ist das Gehäuse 1 des Behälters zur Aufnahme einer, aus der Zeichnung nicht ersichtlichen Kassette dargestellt. In diesem Gehäuse 1 ist ein Transportschieber 2 beweglich, auf dem die Kassetten aufgelegt werden. Am Gehäuse 1 stützt sich eine Feder 3 ab, mittels derer der Transportschieber 2 aus dem Gehäuse 1 verbracht wird. An der Stirnseite des Transportschiebers 2 befindet sich die äußere Abdeckung 4, mittels derer die im Behälter einliegende Kassette vor äußeren Einflüssen geschützt ist. Im Bereich der Stirnseite des Transportschiebers 2 ist ebenfalls der Druckknopf 5 angeordnet, an dessen einer seitlichen Außenfläche der Schnapphaken 6 angeordnet ist. Die Zeichnung zeigt den Schnapphaken 6 als einen an der Seite des Druckknopfes 5 ausgebildeten federelastischen Steges.

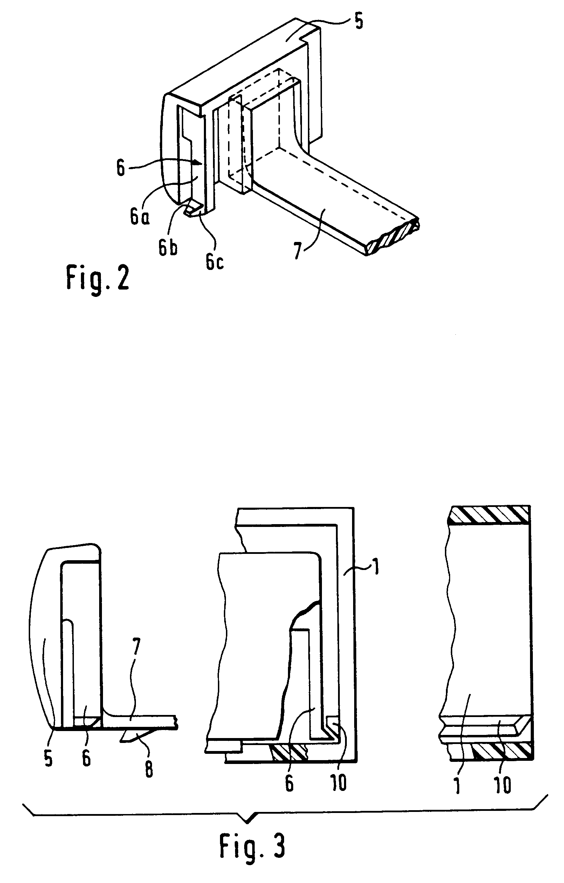

In Figur 2 ist der Druckknopf 5 dargestellt, an dem eine Blattfeder 7 angeordnet ist. An der Unterseite der Blattfeder 7 ist ein, aus der Figur 2 nicht ersichtlicher Zahn angeordnet. Dieser aus Figur 3 ersichtliche Zahn 8 greift in verrastetem Zustand in eine am Boden des Gehäuses 1 befindliche Ausnehmung 9, die in Figur 1 ersichtlich ist, ein. Der Schnapphaken 6 besteht aus einem Steg 6a, in dessen unterem Bereich ein flach nach außen abfallender, vom Steg abgewinkelter, Zapfen 6b ausgebildet ist. An der Rückseite des Zapfens 6b ist eine Schrägfläche 6c befindlich, die bei Verbringen des Transportschiebers 2 in das Gehäuse 1 ein Einschnappen des Schnapphakens 6 unter den Gegenhalter erleichtert.

In Figur 3 ist der Druckknopf 5 mit daran befindlichem Schnapphaken 6 in einer Seitenansicht dargestellt. In dieser ist auch die an der Rückseite des Druckknopfes 5 angebrachte Blattfeder 7 ersichtlich, an deren Unterseite ein Zahn 8 angeordnet ist, der in verrastetem Zustand in die am Boden des Gehäuses 1 vorgesehene Ausnehmung 9 einrastet. Die mittig gezeigte Darstellung der Figur 3 zeigt in einer teilweise geschnittenen Darstellung in Draufsicht den Schnapphaken 6 sowie einen Ausschnitt des Gehäuses 1. Im unteren, dem Schnapphaken 6 gegenüberliegenden Bereich des Gehäuses 1 ist der Gegenhalter 10 feststehend angeordnet. Der aus einer Schiene bestehende Gegenhalter 10 weist an seiner Unterseite eine abgeflachte Schrägseite auf, wodurch beim Einschieben des Transportschiebers 2 in das Gehäuse 1 das Einschnappen des Schnapphakens 6 unter den Gegenhalter 10 erleichtert wird. Aus der dritten Ansicht der Figur 3 ist ein Ausschnitt der Innenwand des Gehäuses 1 ersichtlich, an dem der Gegenhalter 10 feststehend angebracht ist.

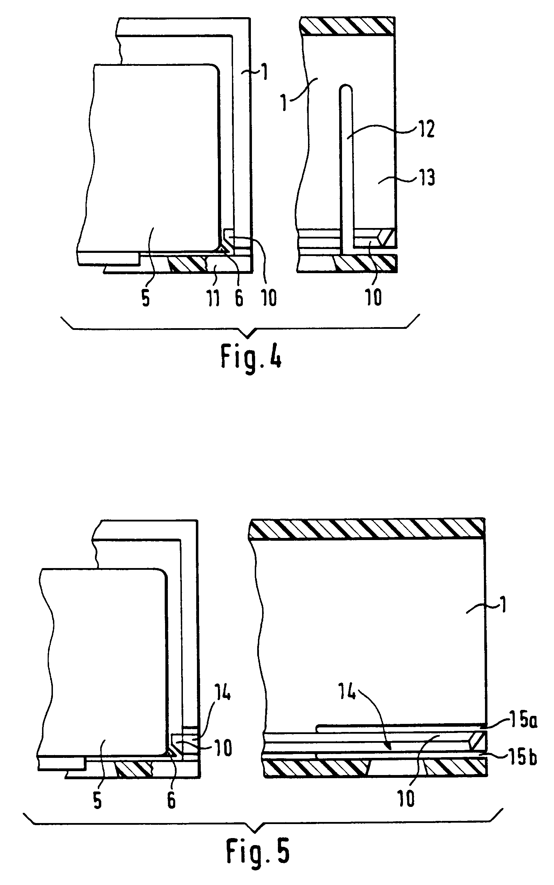

Figur 4 zeigt in der linken Darstellung einen Ausschnitt des Druckknopfes 5, an dessen der Seitenwand des Gehäuses 1 zugewandter Seite der Schnapphaken 6 feststehend angebracht ist. Der Gegenhalter 10 ist federnd an einem Abschnitt des Gehäuses 1 angebracht, der mit dem Boden 11 des Gehäuses 1 nicht in Verbindung steht. In der rechten Darstellung ist der durch einen Ausschnitt 12, jedoch am Gehäuse 1 befindliche Abschnitt 13 ersichtlich, in dessen unterem Bereich der Gegenhalter 10 angeordnet ist. Dadurch ist bei dieser Ausführungsform der Gegenhalter 10 als federndes Element ausgestaltet.

Figur 5 zeigt den fest am Druckknopf 5 angebrachten Schnapphaken 6. Der auch bei dieser Ausführungsform federnd gelagerte Gegenhalter 10 ist an einer elastischen Zunge 14 angeordnet, die durch zwei an der Seitenwand des Gehäuses 1 befindliche Einschnitte 15a, 15b, federnd ausgestaltet ist.

## Patentansprüche

1. Behälter zur Aufnahme einer Kassette mit einem bandförmigen Aufzeichnungsträger, mit einem rechteckigen Gehäuse (1), in dem ein Transportschieber (2) beweglich ist, der sich entlang einer Seitenwand des Gehäuses erstreckt und eine ihm aufliegende Kassette mittels einer sich im Gehäuse abgestützten Feder (3) nach außen verbringt sowie einer im Bereich der Stirnwand des Transportschiebers (2) befindlichen Haltevorrichtung, die eine an einem der beiden durch den Schieber (2) und das Gehäuse (1) gebildeten Teile befestigte, in Bewegungsrichtung des Schiebers verlaufende Blattfeder (7) aufweist, an deren Flachseite am freien Ende ein Zahn (8) angeordnet ist sowie einem durch Fingerdruck betätigbaren Druckknopf (5), durch dessen Betätigung der Schieber (2) zur Bewegung unter dem Einfluß der Feder (3) aus dem Gehäuse (1) nach außen freigegeben wird, **dadurch gekennzeichnet**, daß an der der seitlichen Innenwand des Gehäuses (1) zuweisenden Seite des Druckknopfes (5) ein Schnapphaken (6) angeordnet ist, der bei Belastung des Druckknopfes (5) über einen im Bereich der dem Schnapphaken (6) gegenüberliegenden Innenwand des Gehäuses (1) befindlichen Gegenhalter (10) schnappt und den Druckknopf (5) in einer Entriegelungsposition hält, und daß beim Einschieben des Transportschiebers (2) der Schnapphaken (6) unter den Gegenhalter (10) greift.

2. Behälter nach Anspruch 1, **dadurch gekennzeichnet**, daß der Schnapphaken (6) aus einem Steg (6a) besteht, der in seinem unteren Bereich einen flach abfallenden, nach außen abgewinkelten Zapfen (6b) aufweist.

3. Behälter nach Anspruch 1 oder 2, **dadurch gekennzeichnet**, daß der Zapfen (6b) des Schnapphakens (6) in seinem hinteren, dem Gehäuse (1) zuweisenden Bereich eine Schrägfläche (6c) aufweist.

4. Behälter nach Anspruch 1, **dadurch gekennzeichnet**, daß der Gegenhalter (10) aus einer entlang der Innenwand des Gehäuses (1) verlaufenden Schiene besteht.

5. Behälter nach Anspruch 4, **dadurch gekennzeichnet**, daß die Schiene an ihrer Unterseite eine zur Innenwand des Gehäuses (1) abfallende Schrägfläche aufweist.

6. Behälter nach einem der vorhergehenden Ansprüche, **dadurch gekennzeichnet**, daß der den Schnapphaken (6) bildende Steg federelastisch an der Seite des Druckknopfes (5) angeordnet ist und der Gegenhalter (10) fest am Gehäuse (1) angebracht ist.

7. Behälter nach einem der Ansprüche 1 bis 5, **dadurch gekennzeichnet**, daß der Schnapphaken (6) feststehend an der Seite des Druckknopfes (5) angeordnet ist und der Gegenhalter (10) an einem elastischen Abschnitt (13) der Seitenwand des Gehäuses (1) befindlich ist, der durch einen Einschnitt vom Boden (11) des Gehäuses (1) getrennt ist.

8. Behälter nach einem der Ansprüche 1 bis 5, **dadurch gekennzeichnet**, daß der Schnapphaken (6) fest an der Seite des Druckknopfes (5) angeordnet ist und der Gegenhalter (10) an einer elastischen Zunge (14) angesetzt ist, die durch zwei an der Seitenwand des Gehäuses 1 befindliche Einschnitte (15a, 15b) gebildet ist.

## Claims

1. Container for accommodating a cassette with a tape-like recording medium, having a rectangular housing (1) in which there is movable a transport slider member (2) that extends along a side wall of the housing and brings a cassette lying on it to the outside by means of a spring (3) supported in the housing, and having a retaining device located in the region of the end wall of the transport slider member (2), which device has a leaf spring (7) secured to one of the two components formed by the slider member (2) and the housing (1) and extending in the direction of movement of the slider member, at the free end of the flat side of which spring a tooth (8) is arranged, and having a push-button (5), actuable by finger pressure, the actuation of which releases the slider member (2), allowing it to move outwards out of the housing (1) under the action of the spring (3), characterised in that arranged on the side of the push-button (5) facing the lateral inside wall of the housing (1) is a snap hook (6) which when the push-button (5) is pressed snaps over a counter-holding member (10) located in the region of the inside wall of the housing (1) opposite the snap hook (6) and holds the push-button (5) in a disengaged position, and that when the transport slider member (2) is pushed in, the snap hook (6) engages under the counter-holding member (10).

2. Container according to claim 1, characterised in that the snap hook (6) comprises a bar (6a) which has in its lower region a peg (6b) that is angled outwards and slopes gently downwards.

3. Container according to claim 1 or 2, characterised in that the peg (6b) of the snap hook (6) has in its rear region facing the housing (1) an oblique surface (6c).

4. Container according to claim 1, characterised in that the counter-holding member (10) comprises a rail extending along the inside wall of the housing (1).

5. Container according to claim 4, characterised in that the rail has on its underside an oblique surface sloping down towards the inside wall of the housing (1).

6. Container according to any one of the preceding claims, characterised in that the bar forming the snap hook (6) is arranged in a resilient manner on the side of the push-button (5) and the counter-holding member (10) is rigidly attached to the housing (1).

7. Container according to any one of claims 1 to 5, characterised in that the snap hook (6) is arranged in a fixed manner on the side of the push-button (5) and the counter-holding member (10) is located on a resilient portion (13) of the side wall of the housing (1) which is separated by a cut-out portion from the floor (11) of the housing (1).

8. Container according to any one of claims 1 to 5, characterised in that the snap hook (6) is arranged in a fixed manner on the side of the push-button (5) and the counter-holding member (10) is attached to a resilient tongue (14) which is formed by two cut-out portions (15a, 15b) in the side wall of the housing (1).

## Revendications

1. Récipient destiné à recevoir une cassette avec un support d'enregistrement en forme de bande, comprenant une boîte rectangulaire (1) dans laquelle est mobile un poussoir de transport (2) qui s'étend le long d'une paroi latérale de la boîte et amène vers l'extérieur une cassette placée sur lui, au moyen d'un ressort d'expulsion (3) appuyé dans la boîte, ainsi qu'un dispositif de maintien situé dans la région de la paroi frontale du poussoir de transport (2) et qui présente un ressort-lame (7) fixé à l'une des deux pièces formées par le poussoir (2) et la boîte (1), ressort-lame qui est orienté dans la direction de mouvement du poussoir et sur l'un des grands côtés duquel est disposée, à l'extrémité libre du ressort-lame, une dent (8), de même qu'un bouton de pression (5) pouvant être actionné par pression du doigt et par l'actionnement duquel le poussoir (2) est libéré pour son mouvement vers l'extérieur, hors de la boîte (1), sous l'effet du ressort d'expulsion (3), caractérisé en ce qu'un crochet d'encliquetage (6) est disposé sur le côté du bouton de pression (5) dirigé vers la paroi latérale intérieure de la boîte (1), crochet qui, lorsqu'une pression est exercée sur le bouton (5), vient s'encliqueter par-dessus un contre-appui (10) situé dans la zone de la paroi intérieure de la boîte (1) située en regard du crochet d'encliquetage (6) et maintient le bouton de pression (5) à une position de déverrouillage, et que le crochet d'encliquetage (6) s'engage sous le contre-appui (10) lorsque le poussoir de transport (2) est glissé de nouveau à l'intérieur de la boîte.

2. Récipient selon la revendication 1, caractérisé en ce que le crochet d'encliquetage (6) est constitué d'une barrette (6a) comportant dans sa partie inférieure un tenon (6b) coudé vers l'extérieur et présentant une faible pente descendante.

3. Récipient selon la revendication 1 ou 2, caractérisé en ce que le tenon (6b) du crochet d'encliquetage (6) présente un biseau (6c) dans sa partie arrière dirigée vers la boîte (1).

4. Récipient selon la revendication 1, caractérisé en ce que le contre-appui (10) est constitué d'une nervure s'étendant le long de la paroi intérieure de la boîte (1).

5. Récipient selon la revendication 4, caractérisé en ce que le côté inférieur de la nervure présente un biseau descendant en direction de la paroi intérieure de la boîte (1).

6. Récipient selon une des revendications précédentes, caractérisé en ce que la barrette constituant le crochet d'encliquetage (6) est disposée élastiquement sur le côté du bouton de pression (5) et le contre-appui (10) est agencé fixe sur la boîte (1).

7. Récipient selon une des revendications 1 à 5, caractérisé en ce que le crochet d'encliquetage (6) est disposé fixe sur le côté du bouton de pression (5) et le contre-appui (10) est situé sur un segment élastique (13) de la paroi latérale de la boîte (1), qui est séparé par une entaille du fond (11) de la boîte (1).

8. Récipient selon une des revendications 1 à 5, caractérisé en ce que le crochet d'encliquetage (6) est disposé fixe sur le côté du bouton de pression (5) et le contre-appui (10) est accolé à une languette élastique (14) formée par deux entailles (15a, 15b) pratiquées dans la paroi latérale de la boîte (1).
